**Europäisches Patentamt**

**European Patent Office**

**Office européen des brevets**

(11) Veröffentlichungsnummer : **0 379 189 B1**

## (12) EUROPÄISCHE PATENTSCHRIFT

(45) Veröffentlichungstag der Patentschrift :
07.10.92 Patentblatt 92/41

(51) Int. Cl.$^5$ : **F16L 45/00**

(21) Anmeldenummer : **90100971.2**

(22) Anmeldetag : **18.01.90**

(54) Revisionsverschluss für isolierte Blechkanalwandungen.

(30) Priorität : **19.01.89 DE 3901393**

(43) Veröffentlichungstag der Anmeldung :
**25.07.90 Patentblatt 90/30**

(45) Bekanntmachung des Hinweises auf die
Patenterteilung :
**07.10.92 Patentblatt 92/41**

(84) Benannte Vertragsstaaten :
**AT BE CH DE DK ES FR GB IT LI NL SE**

(56) Entgegenhaltungen :
**AT-B- 293 805**
**DE-U- 8 225 276**
**FR-A- 2 316 494**

(73) Patentinhaber : **METU-System Meinig KG**
**Seitinger Strasse 186**
**W-7201 Rietheim-Weilheim 2 (DE)**

(72) Erfinder : **Meinig, Manfred**
**Goethestrasse**
**W-7201 Rietheim-Weilheim 2 (DE)**

(74) Vertreter : **Patentanwälte Dipl.-Ing. Klaus**
**Westphal Dr. rer. nat. Bernd Mussgnug Dr.**
**rer.nat. Otto Buchner**
**Waldstrasse 33**
**W-7730 VS-Villingen-Schwenningen (DE)**

EP 0 379 189 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft einen Revisonsverschluß für isolierte Blechkanalwandungen mit Revisionsöffnung und Revisionsdeckel gemäß dem Oberbegriff des Anspruchs 1.

Blechkanäle, die in der Klima- und Belüftungstechnik eingesetzt werden, werden vielfach zum Zwecke der Wärmedämmung und/oder Geräuschdämpfung mit einer Isolierschicht versehen. Diese Isolierschicht, die beispielsweise aus Glaswolle bestehen kann, kann entweder als Außenisolierung von außen oder als Innenisolierung von innen auf die Blechwandung aufgebracht sein. Die Oberseite der Isolierung ist in der Regel durch eine Kaschierung, z.B. in Form einer Aluminiumfolie, geschützt. Auch müssen solche Blechkanäle Revisionsöffnungen zur Inspektion, zur Wartung von Kanaleinbauten und zur Reinigung besitzen, die mit Revisionstüren, -deckeln, -klappen oder dgl. zu verschließen sind.

Bei einer aus der DE 82 25 276 -U- bekannten Anordnung besteht der Revisionsdeckel aus einem länglichen, ovalen Außendeckel mit einem allseitig umlaufenden Klemmrand, der mit einem Innendeckel gleicher Form und Größe über zwei Schraubenbolzen verbunden ist, die von außen durch Schraubknöpfe festziehbar sind.

Soll ein solcher Revisionsdeckel für eine isolierte Blechkanalwandung verwendet werden, so kann bei einer Außenisolierung der innere Rand der Isolierschicht durch einen an der Kanalaußenwandung durch Schrauben oder Nieten befestigten, sich konisch nach außen erweiternden Blechring abgedeckt und eingefaßt werden. Hierfür muß die Isolierung im weiten Deckelbereich ausgeschnitten werden, was zur Folge hat, daß der ganze Bereich einschließlich des Revisionsdeckels eine Kältebrücke bildet. Bei einer anderen Ausführung nach dem obigen Gebrauchsmuster ist ein zweiteiliger Blechring, der mit der Revisionsöffnung fluchtet und den zur Revisionsöffnung hinweisenden Rand der Isolierschicht abdeckt, vorgesehen. Außendeckel und Innendeckel liegen direkt auf dem Blechring bzw. auf der Kanalwandung auf. Nachteilig ist hierbei, daß der Blechring wegen der dünnen Kanalwand an der Kanalwand mit einer Vielzahl von Nieten oder Schrauben befestigt werden muß. Außerdem muß der Rahmen bei innenisolierten Blechkanälen zusätzlich mit einer Dichtungsmasse abgedichtet werden.

Die Aufgabe der Erfindung besteht darin, einen Revisionsverschluß mit Revisionsöffnung und Revisionsdeckel für isolierte Blechkanalwandungen so zu verbessern, daß die Montage erleichtert wird und eine preisgünstige Herstellung möglich ist. Gleichzeitig soll die Isolierwirkung des Revisionsverschlusses verbessert werden.

Diese Aufgabe wird bei einem gattungsgemäßen Revisionsverschluß mit den gemäß Anspruch 1 gekennzeichneten Merkmalen gelöst. Der profilierte Blechring nach diesem Vorschlag kann in der erforderlichen Länge für den Blechausschnitt der Revisionsöffnung zugeschnitten werden und in einfacher Weise mit der Falztasche auf den Blechrand des Ausschnittes aufgesteckt werden. Der Blechring weist einen im wesentlichen U-förmigen Querschnitt auf, mit einem Mittelteil, einem ersten Schenkel und einem zweiten Schenkel, zwischen denen die Isolierung der Kanalwandung eingefaßt ist. Bei einer Außenisolierung wird der Blechring mit der am ersten Schenkel des U-Profils vorgesehenen Falztasche so in die Öffnung eingesetzt, daß der zweite Schenkel des U-förmigen Profils die Isolierung von außen umschließt. Der gleiche Blechring ist ohne Änderungen für Innenisolierungen verwendbar. In diesem Fall wird er mit der Falztasche so in den Blechausschnitt eingesetzt, daß der zweite Schenkel des U- förmigen Profils die Isolierung von innen umfaßt.

Zur Abdichtung der Revisionsöffnung weist der Innendekkel in vorteilhafter Ausführung an der Außenseite des Klemmrandes einen Dichtungsstreifen auf, der auf dem Blechring aufliegt. Bei außen isolierten Blechkanalwandungen ist die Falztasche des Blechringes vorzugsweise so bemessen, daß sie von dem aufliegenden Innendeckel überdeckt wird und daß der Dichtungsstreifen des Innendeckels mit der Blechwandung des Kanals abdichtet.

Bei innen isolierten Kanalwandungen liegt der Dichtungsstreifen des Innendeckels auf dem zweiten Schenkel des Blechringes von der Kanalinnenseite her auf. Zur Verbesserung der Abdichtung kann zusätzlich eine Dichtung in der Falztasche vorgesehen sein. Hierzu kann z.B. eine dauerplastische Dichtungsmasse in die Falztasche eingespritzt sein.

Der Blechring weist vor dem Einbau in die Revisionsöffnung vorzugsweise eine geringere Krümmung als der Blechausschnitt auf. Dadurch ist der Blechring nach dem Einbau durch seine Eigenspannung in dem Ausschnitt sicher fixiert.

Die Stoßstelle der beiden sich gegenüberliegenden Enden des Blechringes kann in vorteilhafter Weiterbildung verbunden sein, beispielsweise durch einen Blechstreifen, der in Schlitze des Blechbandes einschiebbar ist. Zusätzlich kann die Stoßstelle durch einen selbstklebenden Aluminiumstreifen abgedeckt sein.

Für besonders hohe Ansprüche an die Isolierung und Dichtheit der Revisionsöffnung kann in vorteilhafter Weiterbildung der Innendeckel zweiteilig ausgeführt sein, nämlich aus einer ebenen Abdeckplatte, die von innen auf der Blechkanalwandung bzw. auf dem Blechring aufliegt, und einem profilierten Mittelblech bestehen.

Das Mittelblech ist kegelstumpfförmig ausgebildet und weist im Randbereich eine entlang der Öffnung umlaufende, nach außen hervorstehende Wulst auf. Die beiden Teile des Innendeckels können an der Übergangsstelle zwischen dem Mantel des Kegelstumpfes und der Wulst mit der Abdeckplatte mittels Schrauben oder Nieten verbunden sein. Die Abdeckplatte ist in Richtung zur Kanalaußenseite hin mit einer durchgehenden Isolierung beschichtet. Der Rand der Abdeckplatte ist vorzugsweise leicht nach außen abgewinkelt. Dadurch wird das Anpressen der Dichtung an die Kanalwand in einem Bereich außerhalb des in die Öffnung eingesetzten Blechrings unterstützt. Durch die Isolierung der Abdeckplatte, die z.B. aus Polyäthylenschaum bestehen kann, ist die im Kanalinnern liegende, Wärme aufnehmende Abdeckplatte thermisch gegen die übrigen Revisionsdeckel isoliert. Der wulstförmige Rand des Mittelbleches des Innendeckels sorgt für die Zentrierung des Revisionsdeckels auf dem eingesetzten Blechring. Seine starke Profilierung gibt dem ganzen Innendeckel Stabilität und stellt sicher, daß die durch Anziehen des Außendeckels ausgeübten Kräfte auch auf den Dichtungsrand übertragen werden. Die glatte Innenseite der Abdeckplatte mit dem angeschrägten Rand ist aerodynamisch sehr günstig für die Strömung innerhalb des Blechkanals.

In einer weiteren vorteilhaften Ausführung sind Innendeckel und Außendeckel voneinander lösbar ausgebildet. Am Innendeckel sind zwei kurze Schraubbolzen vorgesehen, auf denen der Außendeckel mit Gewindehülsen festziehbar ist, die mit Schraubknöpfen an der Außenseite des Außendeckels starr verbunden sind. Um einen besonders einfachen Einbau zu ermöglichen, sind mehrere Federklammern auf dem Rand des Innendeckels befestigt.

Der Innendeckel wird zunächst verdreht in die Revisionsöffnung eingeführt und dann in seine endgültige Lage gedreht. Beim Anziehen des Griffbügels nach außen schnappen die Federklammern auf dem Blechring ein und fixieren so den Innendeckel an der Kanalwandung. Danach kann der Außendeckel auf den Innendeckel aufgesetzt werden und durch Drehen der Schraubknöpfe fixiert werden. Der Ausbau geschieht in umgekehrter Reihenfolge.

Bei dieser Ausführung kann in besonders vorteilhafter Weise eine zusätzliche Isolierschicht an der Innenwand des Außendeckels vorgesehen werden. Außerdem stehen die Schraubenbolzen nicht nach außen aus den Schraubknöpfen hervor, da diese mit Gewindehülsen auf den Schraubenbolzen fixiert sind.

Die Erfindung ist nachstehend anhand von Ausführungsbeispielen, die in den Zeichnungen dargestellt sind, näher erläutert. Es zeigen

Figur 1 - einen Teilschnitt einer außen isolierten Blechkanalwandung mit Revisionsöffnung und eingesetztem Revisionsdeckel,

Figur 2 - einen Teilschnitt einer innen isolierten Blechkanalwandung mit Revisionsöffnung und eingesetztem Revisionsdeckel,

Figur 3 - einen Teilschnitt einer außen isolierten Blechkanalwandung mit Revisionsöffnung und eingesetztem Revisionsdeckel in alternativer Ausführung,

Figur 4 - eine perspektivische Ansicht des profilierten Blechringes, der teilweise in den Blechausschnitt der Revisionsöffnung eingesetzt ist,

Figur 5 - eine perspektivische Ansicht des an der Stoßstelle mit einem Blechstreifen verbundenen Blechringes gemäß Figur 4,

Figur 6 - einen Querschnitt des Blechbandes,

Figur 6a - einen Querschnitt des Blechbandes in alternativer Ausführung,

Figur 7 - eine perspektivische Ansicht der Stoßstelle des Blechrings gemäß Figur 4 mit aufgeklebtem Aluminiumstreifen,

Figur 7a - einen Schnitt durch den Blechring längs der Linie A-A gemäß Figur 7,

Figur 8 - einen Teilschnitt einer außenisolierten Blechkanalwandung mit Revisionsöffnung und eingesetztem Revisionsdeckel in einer weiteren Ausführung,

Figur 9 - einen Teilschnitt der Blechkanalwandung mit Revisionsöffnung und Revisionsdeckel längs der Linie VIII-VIII gemäß Figur 8.

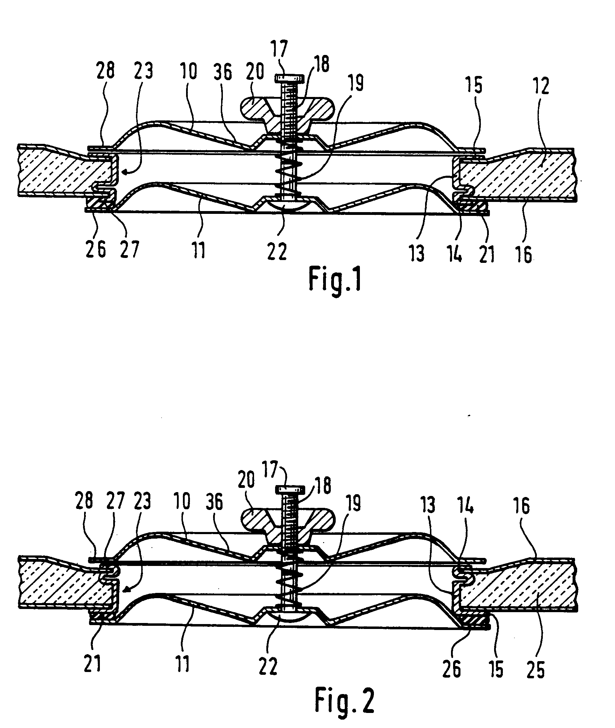

Eine Kanalwandung 16, die mit einer Außenisolierung 12 versehen ist, weist eine ovale Revisionsöffnung auf, in die gemäß Figur 1 ein Revisionsdeckel mit einem Außendeckel 10 und einem Innendeckel 11 eingesetzt ist. Die Isolierung 12 ist am Rand des Blechausschnittes mit einem Blechring 23 eingefaßt, der als profiliertes Blechband ausgebildet ist.

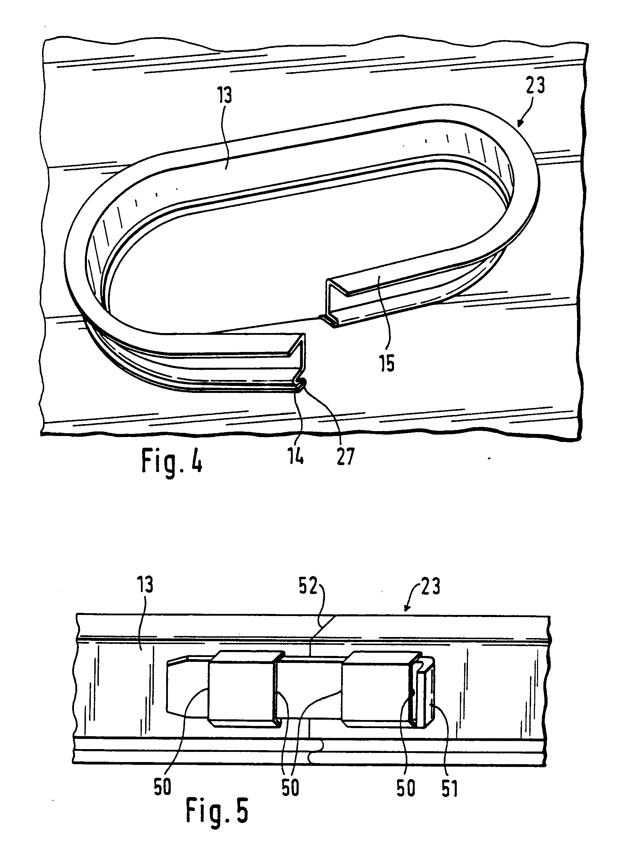

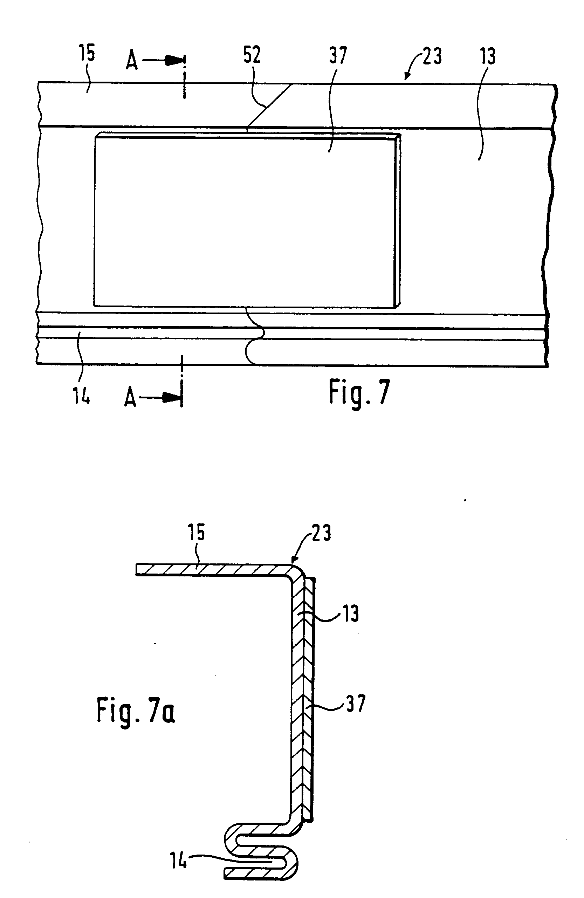

Der Blechring 23 besitzt einen im wesentlichen U-förmigen Querschnitt, mit einem Mittelteil 13, einem ersten Schenkel 27 und einem zweiten Schenkel 15, zwischen denen die Isolierung 12 eingefaßt ist. Das Ende des ersten Schenkels des U-förmigen Blechbandes ist S-förmig profiliert, wobei dessen Abschluß durch eine U-förmige Falztasche 14 gebildet ist. Der Blechring 23 ist mit der Falztasche 14 auf die Kante des Ausschnittes in der Kanalwandung 16 so aufgeschoben, daß der Rand des Ausschnittes von innen und von außen von der Falztasche 14 umfaßt ist. Zweckmäßigerweise weist der Blechring 23 vor dem Einsetzen eine etwas kleinere Krümmung als der Blechausschnitt auf. Es ist dann nach dem Einsetzen durch seine Eigenspannung sicher in dem Ausschnitt fixiert. Zusätzlich kann es gemäß Figur 5 an der Stoßstelle 52 zwischen den beiden Enden mittels eines Blechstreifens 51 gesichert werden. Dazu sind in das Mittelteil 13 des Blechringes 23 an den beiden Enden je zwei Schlitze 50 eingestanzt. Der Blechstreifen 51 ist in die dadurch entstehenden Laschen eingeschoben. Alternativ oder zusätzlich kann die Stoßstelle 52 des Blechringes 23 gemäß Figur 7 bzw. 7a mit einem selbstklebenden Aluminiumstreifen 37 überklebt sein.

Außendeckel 10 und Innendeckel 11 des Revisionsdeckels weisen gemäß Figur 1 gleiche Form und Größe auf. Beide Deckel besitzen außen einen allseitig umlaufenden Klemmrand 26, 28. Der Klemmrand 28 des Außendeckels 10 liegt auf dem zweiten Schenkel 15 des U-förmig profilierten Blechringes 23 auf. Der Klemmrand 26 des Innendeckels 11 trägt auf seiner in Richtung zum Außendeckel 10 weisenden Seite einen Dichtungsstreifen 21, beispielsweise in Form eines selbstklebenden Schaumstoffstreifens. Der Dichtungsstreifen 21 überdeckt die Falztasche 14 des Blechringes 23 und liegt auf der Kanalwandung 16 auf der Innenseite des Blechkanals dichtend auf.

An die ebenen Klemmränder 28, 26 von Außendeckel 10 und Innendeckel 11 schließt sich jeweils ein schräg nach außen verlaufender, gewölbter Abschnitt an, der in einen nach innen eingesenkten gewölbten Abschnitt übergeht. Der Mittelabschnitt von Außendeckel 10 und Innendeckel 11 ist etwas nach außen abgesetzt und enthält je einen Schraubenbolzen 18 (in Figur 1 ist wegen der Darstellung im Querschnitt durch den ovalen Revisionsdeckel nur ein Schraubenbolzen erkennbar). Der als Schloßschraube ausgebildete Schraubenbolzen 18 ist mit seinem Kopf 22 am Innendeckel 11 fixiert und durchsetzt den Außendeckel 10, der durch den Schraubknopf 20 angezogen werden kann.

Der Schaft jedes Schraubenbolzens 18 ist von einer zylindrischen Schraubenfeder 19 umfaßt, welche den Außendeckel 10 und den Innendeckel 11 im nicht festgezogenen Zustand auseinanderspreizt, um das Einführen des Revisionsdeckels in die Revisionsöffnung zu erleichtern.

Zum Einsetzen wird der Schraubknopf 20 bis an den Anschlag 17 am Ende des Schraubenbolzens 18 herausgedreht, wobei Innendeckel 11 und Außendeckel 10 durch die Feder 19 auseinandergespreizt werden. Der ovale Revisionsdeckel kann nach Verdrehen gegenüber der Längsachse in die Revisionsöffnung eingesetzt werden. Dabei genügt meist schon eine Verdrehung von 30°. Nach Zurückdrehen und Einpassen des Innendeckels 11 in den ovalen Ausschnitt werden die beiden Schraubknöpfe 20 angezogen, bis der Außendeckel 10 mit seinem Klemmrand 28 außen auf dem Schenkel 15 des Blechringes 23 aufliegt und die Dichtung 21 auf dem Klemmrand 26 des Innendeckels 11 mit der Falztasche 14 bzw. der Kanalwandung 16 abdichtet.

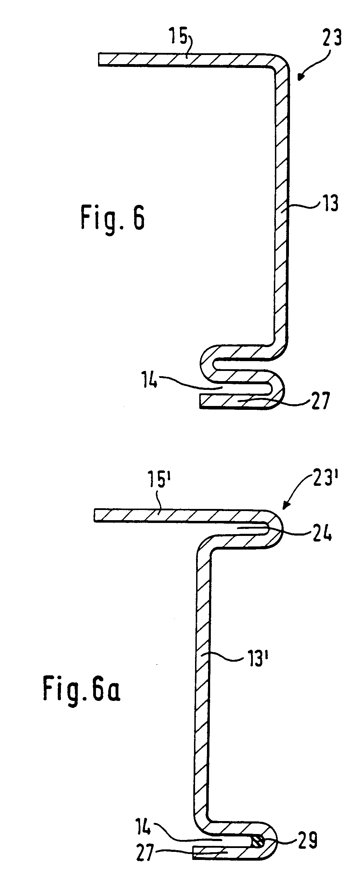

Wie in Figur 2 dargestellt, kann der gleiche Blechring 23 auch zur Einfassung der Isolierung bei innen isolierten Blechkanälen eingesetzt werden. Der einzige Unterschied zu Figur 1 besteht darin, daß der Blechring 23 so mit seiner Falztasche 14 in den Ausschnitt eingesetzt ist, daß der zweite Schenkel 15 des Blechringes 23 die Innenisolierung 25 von innen her umschließt. Der Dichtungsstreifen 21 des Innendeckels 11 liegt dann direkt auf diesem Schenkel auf. In der Regel reicht dies zur Abdichtung der Revisionsöffnung aus. Bei besonders hohen Anforderungen an die Dichtheit kann gemäß Figur 6a eine zusätzliche Dichtung 29 in der Falztasche 14 vorgesehen sein, etwa in Form einer dauerplastischen Dichtungsmasse, die in die Falztasche eingespritzt ist.

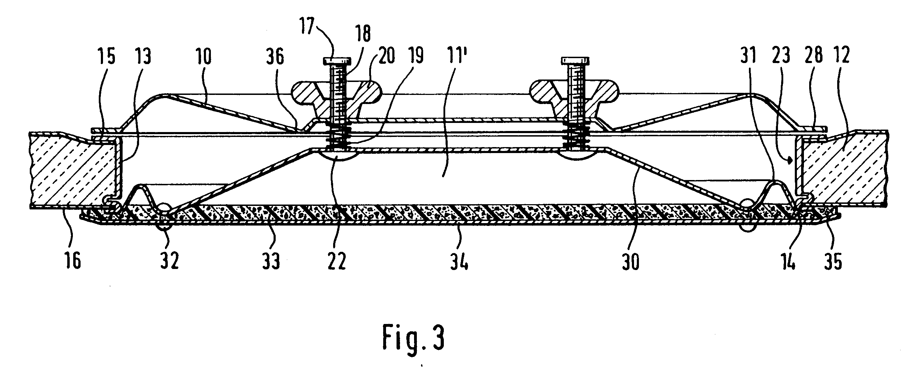

Obwohl normalerweise wegen des relativ großen Abstandes von Außendeckel 10 und Innendeckel 11 keine zusätzliche Isolierung erforderlich ist, um größere Wärmeverluste am Revisionsdeckel zu vermeiden, kann für besonders hohe Anforderungen ein gemäß Figur 3 aufgebauter Revisionsdeckel verwendet werden. Der Innendeckel 11′ ist zweiteilig aufgebaut; er besteht aus eine profilierten Mittelblech 30, in dessen mittleren Bereich die beiden Schraubenbolzen 18 in der vorher beschriebenen Weise angeordnet sind, und aus einer ebenen Abdeckplatte 34, die an der Innenwand des Blechkanals anliegt. Das Mittelblech 30 des Innendeckels 11′ ist kegelstumpfförmig ausgebildet und weist im Randbereich eine entlang des Ausschnittes der Revisionsöffnung umlaufende, nach außen hervorstehende Wulst 31 auf. An der Übergangsstelle zwischen dem Mantel des Kegelstumpfes und der Wulst 31 ist das Mittelblech 30 mit der Abdeckplatte 34 durch Nieten 32, Kunststoffschrauben oder dergleichen verbunden. Auf die Außenseite der Abdeckplatte 34 ist eine durchgehende Isolierschicht 33 aus elastischem Material, z.B. aus Polyäthylenschaum, aufgebracht. Der Rand der Abdeckplatte 34 ist leicht nach außen hin abgewinkelt, wodurch das Anpressen der Dichtung an die Kanalwand 16 im Bereich außerhalb der Falztasche 14 erleichtert wird.

Mögliche Querschnittsformen des profilierten Blechringes 23 sind in den Figuren 6 und 6a dargestellt. Das Blechband weist einen im wesentlichen U-förmigen Querschnitt auf, mit einem Mittelteil 13, einem ersten Schenkel 27 und einem zweiten Schenkel 15. Am ersten Schenkel 27 ist eine U-förmige Falztasche 14 so angeordnet, daß deren freier Schenkel 15 in die gleiche Richtung wie der zweite Schenkel 15 des U-förmigen Profils weist. Gemäß Figur 6 geht die Falztasche 14 in eine entgegengesetzte U-förmige Biegung über, so daß insgesamt zwischen dem Mittelteil 13 und dem ersten Schenkel 27 eine S-förmige Profilierung entsteht.

In alternativer Ausführung kann gemäß Figur 6a zusätzlich zu der U-förmigen Falztasche 14 am Ende des ersten Schenkels 27 eine zweite U-förmige Falztasche 24 gleicher Form und Größe vorgesehen sein, die in die gleiche Richtung weist und direkt in den zweiten Schenkel 15 des U-förmigen Profils übergeht. Zur Verbesserung der Abdichtung ist bei dieser Ausführung zusätzlich eine Dichtung 29 aus dauerplatischer Dichtungsmasse in die Falztasche 14 am ersten Schenkel eingespritzt. Eine solche Dichtung könnte gleichfalls auch bei der anderen Ausbildung des Blechringes 23 gemäß Figur 6 vorgesehen sein.

Auch in bestehende Blechkanalwandungen läßt sich die beschriebene Anordnung problemlos einbauen. Dazu wird bei einer außen isolierten Blechkanalwandung zunächst die Isolierung in der gewünschten Größe ausgeschnitten und sodann der Ausschnitt in die Blechkanalwandung eingebracht. Das Blechband, das vor dem Einbau in den Ausschnitt einen etwas größeren Biegeradius aufweist, wird dann mit seiner Falztasche 14 am ersten Schenkel 27 des U-förmigen Profils in den Ausschnitt eingesetzt. Falls gewünscht, kann es zusätzlich an der Stoßstelle der beiden Enden durch einen Blechstreifen fixiert werden und mittels eines selbstklebenden Aluminiumstreifens abgedichtet werden. Beim Einsetzen des Blechbandes ist lediglich darauf zu achten, daß die Isolierung sauber eingefaßt und nicht beschädigt wird. Nach Einsetzen und Fixieren des Blechbandes kann die Revisionsöffnung mit dem Revisionsdeckel verschlossen werden.

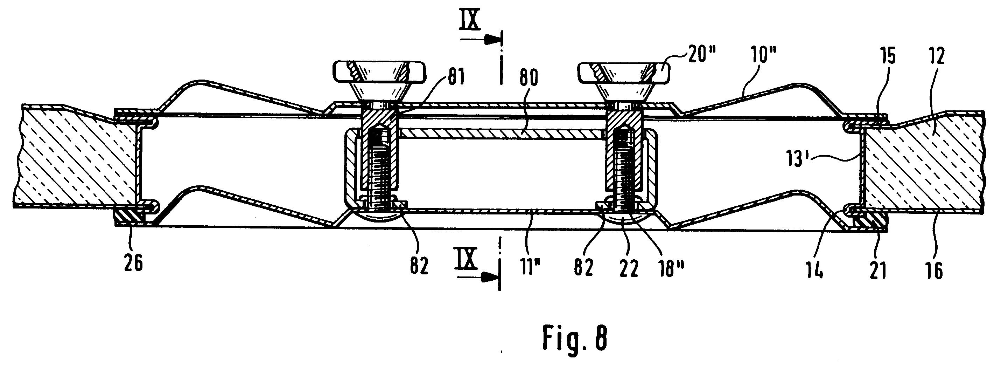

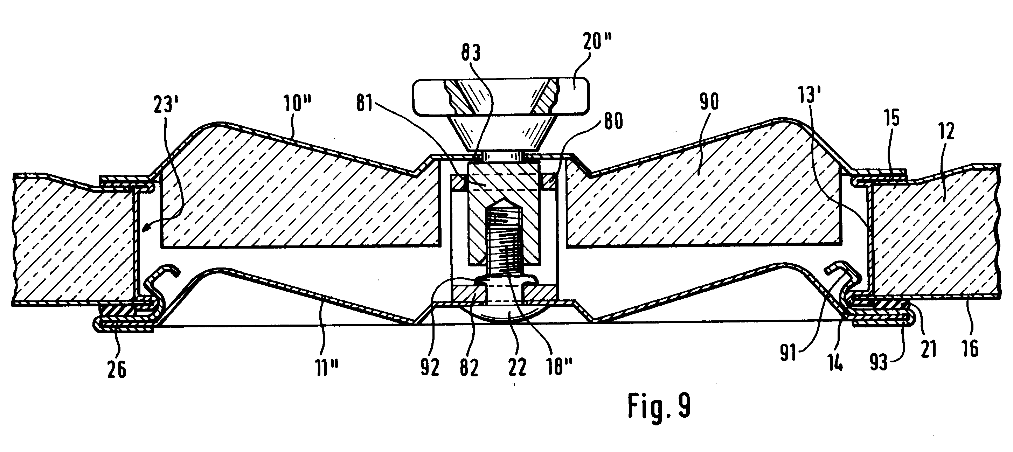

In den Figuren 8 und 9 ist eine weitere Ausführung des Revisionsdeckels dargestellt. Der Deckel besteht aus einem Innendeckel 11″ und einem Außendeckel 10″, die im wesentlichen die gleiche Form, wie eingangs anhand von Figur 1 und 2 beschrieben, aufweisen. Um ein besonders einfaches Einsetzen bzw. Herausnehmen des Revisionsdeckels zu ermöglichen, sind jedoch Innendeckel 11″ und Außendeckel 10″ völlig voneinander trennbar.

Am Innendeckel 11″ sind zwei nach außen vorstehende Schraubenbolzen 18″ befestigt, die kürzer als die Schraubenbolzen gemäß Figur 1 bzw. 2 sind. In zwei Bohrungen 83 sind jeweils ein Schraubknopf 20″ an der Außenseite des Außendeckels 10″ gehalten, die mit einer Gewindehülse 81 an der Innenseite des Außendeckels 10″ verbunden sind.

Zwischen den beiden Schraubenbolzen 18″ des Innendeckels 11″ ist ein U-förmig gebogener Griffbügel 80 mit seinen beiden nach innen gebogenen Enden 82 befestigt. Zur Befestigung sind die beiden Enden 82 von jeweils einem Schraubenbolzen 18″ durchsetzt und durch eine angepreßte Wulst 92 gegenüber dem Kopf des Schraubenbolzens 22 an der Innenseite des Innendeckels 11″ fixiert. Auf dem allseits umlaufenden Klemmrand 26 des Innendeckels 11″, der etwas größer als der Ausschnitt der Revisionsöffnung ist, sind vier Federklammern 91 mit einer U-förmigen Klemmlasche 93 aufgeschoben. Zwischen dem Klemmrand 26 und der Kanalwandung 16 ist ein umlaufender Dichtungsstreifen 21 angeordnet.

Soll die Revisionsöffnung verschlossen werden, so wird zunächst der Innendeckel 11″ verdreht in die Öffnung eingeführt und dann in seine endgültige Lage gebracht. Durch Anziehen des Griffbügels 80 nach außen schnappen die Federklammern 91 zu und fixieren den Innendeckel 11″ an der Kanalwandung 16. Danach kann der Außendeckel 10″ auf die Revisionsöffnung aufgesetzt werden und durch Drehen der Schraubknöpfe 20″ mit den Gewindehülsen 81 auf den Schraubenbolzen 18″ angezogen werden, wobei der Dichtungsstreifen 21 luftdicht mit der Kanalwandung 16 abdichtet. Bei dieser Ausführung kann zum Zwecke einer besonders guten Wärmeisolierung eine zusätzliche Isolierungsschicht 90 an der Innenseite des Außendeckels 10″ vorgesehen sein. Diese Isolierschicht ist der Übersichtlichkeit halber in Figur 8 nicht dargestellt. Der in die Revisionsöffnung eingesetzte Blechring 23′ weist vorzugsweise eine Form gemäß Figur 6a auf, da sich bei dieser Ausführung der Blechring leicht in die ovale Form der Revisionsöffnung biegen läßt. 185

## Patentansprüche

1. Revisionsverschluß für isolierte Blechkanalwandungen, mit Revisionsöffnung und Revisionsdeckel, mit einem um die Öffnung senkrecht zur Kanalwandung umlaufenden Blechring, der einen U-förmigen Querschnitt aufweist, mit einem Mittelteil, einem ersten Schenkel und einem zweiten Schenkel, zwischen denen die Isolierung im Bereich der Öffnung eingefaßt ist, wobei der Revisionsdeckel einen Innendeckel und einen Außendeckel aufweist, die gegeneinander festziehbar sind und wobei beide Deckel einen an der Kanalwandung oder am Blechring aufliegenden Klemmrand aufweisen und an mindestens einem Klemmrand eine Dichtung vorgesehen ist, dadurch gekennzeichnet, daß der Blechring (23) aus einem profilierten Blechband besteht, wobei an den ersten Schenkel (27) eine U-förmige Falztasche (14) angeformt ist, mit der der Blechring (23) so auf die Öffnung in der Kanalwandung (16) aufgeschoben ist, daß die Falztasche (14) den Rand des Blechausschnittes von innen und von außen her umschließt.

2. Verschluß nach Anspruch 1, dadurch gekennzeichnet, daß der Blechring (23) an seinem ersten Schenkel (27) S-förmig gefalzt ist, wobei der Abschluß der S-förmigen Falzung von der Falztasche (14) gebildet ist, die in die gleiche Richtung weist wie der zweite Schenkel (15) des U-förmigen Profils.

**3.** Verschluß nach Anspruch 1, dadurch gekennzeichnet, daß der zweite Schenkel (15′) des Blechrings (23′) in eine U-förmige Falztasche (24) gleicher Form und Größe übergeht wie die Falztasche (14) am ersten Schenkel (27) des Blechrings (23′), wobei beide Falztaschen in die gleiche Richtung weisen.

**4.** Verschluß nach einem der vorhergehenden Ansprüche, dadurch gekennzeichnet, daß der Innendeckel (11) an der Außenseite seines Klemmrandes (26) einen Dichtungsstreifen (21) aufweist.

**5.** Verschluß nach Anspruch 4, dadurch gekennzeichnet, daß der Dichtungsstreifen (21) des Innendeckels (11) die Falztasche (14) des Blechringes (23) auf der Kanalinnenseite überdeckt und auf der Kanalwandung (16) dichtend aufliegt.

**6.** Verschluß nach Anspruch 4, dadurch gekennzeichnet, daß der Dichtungsstreifen (21) des Innendeckels (11) auf dem zweiten Schenkel (15) des Blechringes (23) von der Kanalinnenseite her aufliegt.

**7.** Verschluß nach einem der vorhergehenden Ansprüche, dadurch gekennzeichnet, daß in der Falztasche (14) eine Dichtung (29) vorgesehen ist.

**8.** Verschluß nach einem der vorhergehenden Ansprüche, dadurch gekennzeichnet, daß der Blechring (23) durch seine in Richtung zum Rand der Revisionsöffnung wirkende Eigenspannung in der Revisionsöffnung fixiert ist.

**9.** Verschluß nach einem der vorhergehenden Ansprüche, dadurch gekennzeichnet, daß die beiden sich gegenüberliegenden Enden des Blechringes (23) an ihrer Stoßstelle (52) verbindbar sind.

**10.** Verschluß nach Anspruch 9, dadurch gekennzeichnet, daß die beiden sich gegenüberliegenden Enden des Blechringes (23) an ihrer Stoßstelle (52) durch einen Blechstreifen (51) verbindbar sind, der in Schlitze (50) am Mittelteil (13) des Blechrings (23) einschiebbar ist.

**11.** Verschluß nach Anspruch 9, dadurch gekennzeichnet, daß die Stoßstelle (52) der beiden sich gegenüberliegenden Enden des Blechrings (23) durch einen selbstklebenden Aluminiumstreifen (37) abdeckbar ist.

**12.** Verschluß nach einem der vorhergehenden Ansprüche, dadurch gekennzeichnet, daß Revisionsöffnung und Revisionsdeckel eine langgestreckte ovale Form aufweisen.

**13.** Verschluß nach einem der vorhergehenden Ansprüche, dadurch gekennzeichnet, daß am Innendeckel (11) zwei nach außen weisende Schraubenbolzen (18) vorgesehen sind, die den Außendeckel (10) durchsetzen, und die mittels Schraubknöpfen (20) gegen die Spannung von zwischen Außendeckel (10) und Innendeckel (11) vorgesehenen Schraubenfedern (19) festziehbar sind.

**14.** Verschluß nach Anspruch 13, dadurch gekennzeichnet, daß die Schraubknöpfe (20) teilweise in einer Einsenkung (36) des Außendeckels (10) aufgenommen sind.

**15.** Verschluß nach einem der vorhergehenden Ansprüche, dadurch gekennzeichnet, daß Innendeckel (11) und Außendeckel (10) gleiche Form und Größe aufweisen.

**16.** Verschluß nach Anspruch 14, dadurch gekennzeichnet, daß der Innendeckel (11′) aus einem profilierten Mittelblech (30) und aus einer damit verbundenen ebenen Abdeckplatte (34) besteht, die die Revisionsöffnung auf der Kanalinnenseite abdeckt.

**17.** Verschluß nach Anspruch 16, dadurch gekennzeichnet, daß das Mittelblech (30) des Innendeckels (11′) kegelstumpfförmig ausgebildet ist und im Randbereich eine entlang der Revisionsöffnung umlaufende, nach außen hervorstehende Wulst (31) aufweist.

**18.** Verschluß nach Anspruch 17, dadurch gekennzeichnet, daß das Mittelblech (30) des Innendeckels (11′) an der Übergangsstelle zwischen dem Mantel des Kegelstumpfes und der Wulst (31) mit der Abdeckplatte (34) mittels Schrauben oder Nieten (32) verbunden ist.

**19.** Verschluß nach Anspruch 16, 17 oder 18, dadurch gekennzeichnet, daß auf der Außenseite der Abdeckplatte (34) eine Isolierschicht (33) aufgebracht ist.

**20.** Verschluß nach einem der Ansprüche 16 bis 19, dadurch gekennzeichnet, daß die Abdeckplatte (34) einen Rand (35) aufweist, der in Richtung zur Kanalwandung (16) hin angewinkelt ist.

21. Verschluß nach einem der Ansprüche 16 bis 20, dadurch gekennzeichnet, daß der Rand (35) der Abdeckplatte (34) die Falztasche (14) des Blechrings (23) überdeckt und auf der Kanalwandung (16) dichtend aufliegt.

22. Verschluß nach einem der Ansprüche 1 bis 12, dadurch gekennzeichnet, daß am Innendeckel (11″) zwei nach außen weisende Schraubenbolzen (18″) vorgesehen sind, auf denen der Außendeckel (10″) mittels Gewindehülsen (81), die mit Schraubknöpfen (20″) an der Außenseite des Außendeckels (10″) starr verbunden sind, festziehbar ist, wobei Außen- und Innendeckel nach Lösen der Schraubverbindung vollständig voneinander trennbar sind.

23. Verschluß nach Anspruch 22, dadurch gekennzeichnet, daß am Innendeckel (11″) ein nach außen vorstehender Griffbügel (80) vorgesehen ist.

24. Verschluß nach Anspruch 22 oder 23, dadurch gekennzeichnet, daß der Griffbügel (80) U-förmig gebogen ist und mit seinen beiden Enden (82) zusammen mit den Schraubenbolzen (18″) am Innendeckel (11″) festgelegt ist.

25. Verschluß nach Anspruch 24, dadurch gekennzeichnet, daß der Griffbügel (80) an seinen beiden Enden (82) von den Schraubenbolzen (18″) durchsetzt ist und an seinem nach außen vorstehenden Griffteil von den Gewindehülsen (81) durchsetzt ist.

26. Verschluß nach einem der Ansprüche 23 bis 25, dadurch gekennzeichnet, daß auf dem Klemmrand (26) des Innendeckels (11″) als Montagehilfe eine Mehrzahl von Federklammern (91) festgelegt ist, die beim Anziehen des Innendeckels (11″) mit Hilfe des Griffbügels (80) nach außen auf dem Blechring (23, 23′) einschnappen und den Innendeckel (11″) auf dem Blechring (23, 23′) fixieren.

27. Verschluß nach einem der Ansprüche 23 bis 26, dadurch gekennzeichnet, daß an der Innenseite des Außendeckels (10″) eine Isolierschicht (90) vorgesehen ist.

## Claims

1. An inspection opening closure, comprising an inspection opening and inspection cover, for insulated sheet metal duct walls which comprises a sheet metal ring extending around the opening perpendicularly to the duct wall and having a U-shaped cross-section, comprising a middle portion, a first arm and a second arm, between which the insulation is enclosed in the region of the opening, wherein the inspection cover comprises an inner cover and an outer cover which can be tightened towards one another, and wherein both covers comprise a clamping edge applied against the duct wall or on the sheet metal ring and a seal is provided on at least one clamping edge, characterized in that the sheet metal ring (23) consists of a profiled sheet metal band and a U-shaped pocket-forming fold (14) has been formed in the first arm (27) by means of which the sheet metal ring (23) is pushed onto the opening in the duct wall (16) in such a way that the pocket-forming fold (14) covers the edge of the hole in the sheet metal from the inside and from the outside.

2. A closure according to claim 1, characterized in that an S-shape fold is made in the first arm (27) of the sheet metal ring (23) and the end part of the S-shaped fold is formed by the pocket-forming fold (14) which points in the same direction as the second arm (15) of the U-shaped profile.

3. A closure according to claim 1, characterized in that the second arm (15′) of the sheet metal ring (23′) merges into a U-shaped pocket-forming fold (24) having the same shape and size as the pocket-forming fold (14) in the first arm (27) of the sheet metal ring (23′) and both pocket-forming folds point in the same direction.

4. A closure according to any one of the preceding claims, characterized in that the inner cover (11) comprises a sealing strip (21) on the outer side of its clamping edge (26).

5. A closure according to claim 4, characterized in that the sealing strip (21) on the inner cover (11) covers the pocket-forming fold (14) of the sheet metal ring (23) on the inside of the duct and bears in a sealing manner against the duct wall (16).

6. A closure according to claim 4, characterized in that the sealing strip (21) on the inner cover (11) bears on the second arm (15) of the sheet metal ring (23) from the inside of the duct.

7. A closure according to any one of the preceding claims, characterized in that a seal (29) is provided in the pocket-forming fold (14).

8. A closure according to any one of the preceding claims, characterized in that the sheet metal ring (23) is fixed in the inspection opening as a result of its own pressure acting towards the edge of the inspection opening.

9. A closure according to any one of the preceding claims, characterized in that the two facing ends of the sheet metal ring (23) can be connected at their joint (52).

10. A closure according to claim 9, characterized in that the two facing ends of the sheet metal ring (23) can be connected at their joint (52) by means of a strip of sheet metal (51) which can be pushed into slots (50) in the middle portion (13) of the sheet metal ring (23).

11. A closure according to claim 9, characterized in that the joint (52) between the two facing ends of the sheet metal ring (23) can be covered by a self-adhesive aluminium strip (37).

12. A closure according to any one of the preceding claims, characterized in that the inspection opening and inspection cover have a longitudinally extending oval shape.

13. A closure according to any one of the preceding claims, characterized in that two outwardly directed threaded bolts (18) are provided in the inner cover (11) which pass through the outer cover (10) and which can be tightened by means of threaded knobs (20) against the force of coil springs (19) provided between the outer cover (10) and inner cover (11).

14. A closure according to claim 13, characterized in that the threaded knobs (20) are partly housed in a depression (36) in the outer cover (10).

15. A closure according to any one of the preceding claims, characterized in that the inner cover (11) and the outer cover (10) have the same shape and size.

16. A closure according to claim 14, characterized in that the inner cover (11′) consists of a profiled middle plate (30) and a flat cover plate (34), connected to the latter, which covers the inspection opening on the inside of the duct.

17. A closure according to claim 16, characterized in that the middle plate (30) of the inner cover (11′) has a truncated conical shape and comprises an outwardly projecting bulge (31), near the edge, extending around the inspection opening.

18. A closure according to claim 17, characterized in that the middle plate (30) of the inner cover (11′) is connected to the cover plate (34) at the transition region between the skirt of the truncated cone and the bulge (31) by means of screws or rivets (32).

19. A closure according to claim 16, 17 or 18, characterized in that an insulation layer (33) is applied to the outer side of the cover plate (34).

20. A closure according to any one of claims 16 to 19, characterized in that the cover plate (34) comprises an edge (35) which is bent in towards the duct wall (16).

21. A closure according to any one of claims 16 to 20, characterized in that the edge (35) of the cover plate (34) covers the pocket-forming fold (14) in the sheet metal ring (23) and bears in a sealing manner against the duct wall (16).

22. A closure according to any one of claims 1 to 12 or 15, characterized in that two outwardly directed threaded bolts (18″) are provided in the inner cover (11″) on which the outer cover (10″) can be tightened by means of threaded sleeves (81) which are rigidly fixed to threaded knobs (20″) on the outside of the outer cover (10″), and the outer and inner cover can be completely separated from one another after the screw connection is undone.

**23.** A closure according to claim 22, characterized in that an outwardly projecting gripping stirrup (80) is provided on the inner cover (11″).

**24.** A closure according to claim 22 or 23, characterized in that the gripping stirrup (80) is bent into a U-shape and is fixed by means of its two ends (82) together with the threaded bolts (18″) to the inner cover (11″).

**25.** A closure according to claim 24, characterized in that the threaded bolts (18″) pass through the two ends (82) of the gripping stirrup (80) and the threaded sleeves (81) pass through its outwardly projecting handle part.

**26.** A closure according to any one of claims 23 to 25, characterized in that a plurality of resilient clamps (91) are provided on the clamping edge (26) of the inner cover (11″) as an aid to mounting which on pulling the inner cover (11″) outwards by means of the gripping stirrup (80) snap onto the sheet metal ring (23, 23′) and fix the inner cover (11″) to the sheet metal ring (23, 23′).

**27.** A closure according to any one of claims 23 to 26, characterized in that an insulation layer (90) is provided on the inside of the outer cover (10″).


**Revendications**

1°) Fermeture de contrôle pour parois de canalisation en tôle, isolées, avec ouverture de contrôle et couvercle de contrôle, avec un anneau de tôle s'étendant perpendiculairement à la paroi de canalisation verticalement autour de l'ouverture, anneau qui présente une section en forme d'U avec une partie médiane, un premier jambage et un second jambage, entre lesquels est enfermé l'isolation dans la zone de l'ouverture, le couvercle de contrôle présentant un couvercle intérieur et un couvercle extérieur, qui peuvent être tirés l'un contre l'autre et les deux couvercles présentant un bord de serrage reposant sur la paroi de la canalisation ou l'anneau de tôle et un joint d'étanchéité étant prévu sur au moins l'un des bords de serrage, fermeture de contrôle caractérisée en ce que l'anneau de tôle (23) consiste en une bande de tôle profilée, une feuillure (14) en forme d'U étant formée sur le premier jambage (27), feuillure avec laquelle l'anneau de tôle (23) est engagé dans l'ouverture pratique dans la paroi (16) de la canalisation de telle façon que la feuillure (14) enferme le bord de la.découpe en tôle par l'intérieur et par l'extérieur.

2°) Fermeture selon la revendication 1, caractérisée en ce que l'anneau de tôle (23) est replié à son premier jambage (27) en forme d'S, la terminaison de la pliure en forme d'S étant formée par la feuillure (14) qui est orientée dans le même sens que le deuxième jambage (15) du profil en forme d'U.

3°) Fermeture selon la revendication 1, caractérisée en ce que le deuxième jambage (15′) de l'anneau de tôle (23′) passe par une pliure (24) en forme d'U de même forme et de même dimension que la feuillure (14) sur le premier jambage (27) de l'anneau de tôle (23′), les deux feuillures étant orientées dans le même sens.

4°) Fermeture selon l'une des revendications précédentes, caractérisée en ce que le couvercle intérieur (11) présente sur le côté extérieur de son bord de serrage (26) une bande d'étanchéité (21).

5°) Fermeture selon la revendication 4, caractérisé en ce que la bande d'étanchéité (21) du couvercle intérieur (11) recouvre la feuillure (14) de l'anneau de tôle (23) sur le côté intérieur de la canalisation et repose de façon étanche sur la paroi de la canalisation (16).

6°) Fermeture selon la revendication 4, caractérisée en ce que la bande d'étanchéité (21) du couvercle intérieur (11) repose sur le deuxième jambage (15) de l'anneau de tôle (23) à partir du côté intérieur de la canalisation.

7°) Fermeture selon l'une des revendications précédentes, caractérisée en ce qu'il est prévu un joint d'étanchéité (29) dans la feuillure (14).

8°) Fermeture selon l'une des revendications précédentes, caractérisée en ce que l'anneau de tôle (23) est fixé par son expansion propre agissant dans le sens allant vers le bord de l'ouverture de contrôle dans celle-ci.

9°) Fermeture selon l'une des revendications précédentes, caractérisée en ce que les deux extrémités se faisant vis-à-vis de l'anneau de tôle (23) peuvent être reliées à leur point de jonction (52).

10°) Fermeture selon la revendication 9, caractérisée en ce que les deux extrémités se faisant vis-à-vis de l'anneau de tôle (23) peuvent être reliées à leur point de jonction (52) par une bande de tôle (51), qui peut être enfilée dans des fentes (50) sur la partie médiane (13) de l'anneau de tôle (23).

11°) Fermeture selon la revendication 9, caractérisée en ce que le joint de jonction (52) des deux extrémités se faisant face à l'anneau de tôle (23) pouvant être recouvert par une bande d'aluminium autoblocante (37).

12°) Fermeture selon l'une des revendications précédentes, caractérisée en ce que l'ouverture et le couvercle de contrôle présentent une forme ovale dans le sens longitudinal.

13°) Fermeture selon l'une des revendications précédentes, caractérisée en ce que sur le couvercle intérieur (11) sont prévus deux boulons filetés (18) orientés vers l'extérieur, qui passent à travers le couvercle extérieur (10) et qui peuvent être tirés au moyen de boulons de vissage (20) allant contre la tension de ressorts hélicoïdaux (19) prévus entre le couvercle intérieur (11) et le couvercle extérieur (10).

14°) Fermeture selon la revendication 13, caractérisée en ce que les boutons de vissage (20) sont reçus en partie dans un enfoncement (36) du couvercle extérieur (10).

15°) Fermeture selon l'une des revendications précédentes, caractérisée en ce que le couvercle intérieur (11) et le couvercle extérieur (10) présentent la même forme et la même grandeur.

16°) Fermeture selon la revendication, 14, caractérisée en ce que le couvercle intérieur (11′) consiste en une tôle médiane profilée (30) et en une plaque de recouvrement (34) plane reliée à la précédente, qui recouvre l'ouverture de contrôle sur le côté intérieur de la canalisation.

17°) Fermeture selon la revendication 16, caractérisée en ce que la tôle médiane (30) du couvercle intérieur (11′) a la forme d'un tronc de cône, et présente sur le bord un bourrelet (31) saillant vers l'extérieur, faisant tout le tour de l'ouverture de contrôle.

18°) Fermeture selon la revendication 17, caractérisée en ce que la tôle médiane (30) du couvercle intérieur (11′) est reliée à l'endroit du passage entre l'enveloppe du tronc de cône et le bourrelet (31) avec la plaque de recouvrement (34) au moyen de vis ou de rivets (32).

19°) Fermeture selon la revendication 16, 17 ou 18, caractérisée en ce que sur le côté extérieur de la plaque de recouvrement (34) est disposée une couche isolante (33).

20°) Fermeture selon l'une des revendications 16 à 19, caractérisée en ce que la plaque de recouvrement (34) présente un bord (35), qui est recourbé en direction de la paroi de la canalisation (16).

21°) Fermeture selon l'une des revendications 16 à 20, caractérisée en ce que le bord (35) de la plaque de recouvrement (34) recouvre la feuillure (14) de l'anneau de tôle (23) et repose sur la paroi de la canalisation (16) de façon étanche.

22°) Fermeture selon l'une des revendications 1 à 12, caractérisée en ce que sur le couvercle intérieur (11″) sont prévus deux boulons filetés (18″) orientés vers l'extérieur, sur lesquels le couvercle extérieur (10″) peut être serré au moyen de douilles filetées (81), qui sont solidement reliées par des boutons de vissage (20″) au côté extérieur du couvercle extérieur (10″), les couvercles intérieur et extérieur pouvant être séparés l'un de l'autre complètement après le desserrage de la liaison à vis.

23°) Fermeture selon la revendication 22, caractérisée en ce qu'il est prévu sur le couvercle intérieur (11″) une poignée (80) faisant saillie vers l'extérieur.

24°) Fermeture selon la revendication 22 ou 23, caractérisée en ce que la poignée (8) est recourbée en forme d'U et est fixée sur ses deux extrémités (82) en même temps que les boulons filetés (18″) sur le couvercle intérieur (11″).

25°) Fermeture selon la revendication 24, caractérisée en ce que la poignée (80) est traversée à ses deux extrémités (82) par les boulons filetés (18″) et est traversée dans sa partie permettant la préhension et faisant saillie vers l'extérieur par les douilles filetées (81).

26°) Fermeture selon l'une des revendications 23 à 25, caractérisée en ce que, sur le bord de serrage (26) du couvercle intérieur (11″), il est fixé comme moyens de montage un grand nombre de crochets à ressort (91), qui en tirant sur le couvercle intérieur (11″) à l'aide de la poignée (80) s'encliquete vers l'extérieur sur l'anneau de tôle (23, 23′) et fixe le couvercle intérieur (11″) sur l'anneau de tôle (23, 23′).

27°) Fermeture selon l'une des revendications 23 à 26, caractérisée en ce que sur le côté intérieur du couvercle extérieur (10″), il est prévu une couche isolante (90).

Fig.1

Fig.2

Fig.3

Fig. 4

Fig. 5

Fig. 6

Fig. 6a

Fig. 7

Fig. 7a

Fig. 8

EP 0 379 189 B1

Fig. 9